# EUROPEAN PATENT SPECIFICATION

(11) **EP 1 592 733 B1**
(45) Date of publication and mention of the grant of the patent: **08.07.2009**
(21) Application number: 04702107.6
(22) Date of filing: 14.01.2004
(51) Int. Cl.: C08J 9/00, C08J 9/22, C08L 33/18, C08L 33/20, C08F 6/00, C08F 6/14, C08F 6/24

(54) **MICROSPHERES**
MIKROKUGELN
MICROSPHERES

(30) Priority: 11.02.2003 EP 03445021
(43) Date of publication of application: 09.11.2005
(73) Proprietor: Akzo Nobel N.V., 6800 SB Arnhem (NL)
(72) Inventor: KRON, Anna, SE-85460 Sundsvall (SE); NORDIN, Ove, 862 91 KVISSLEBY (SE); NILSSON, Sture, 852 38 SUNDSVALL (SE); BERGLUND, Christina, 852 37 SUNDSVALL (SE)
(74) Representative: Schalkwijk, Pieter Cornelis
(86) International application number: PCT/SE2004/000031
(87) International publication number: WO 2004/072160

(56) References cited:
- US-A- 2 960 486
- US-A- 3 780 006
- US-A- 4 255 307
- US-A- 4 287 308
- US-A1- 2002 132 100

## Description

The present invention relates to thermally expandable thermoplastic microspheres and a process for the production thereof.

Expandable thermoplastic microspheres comprising a thermoplastic polymer shell and a propellant entrapped therein are commercially available under the trademark EXPANCEL^{®} and are used as a foaming agent in many different applications.

In such microspheres, the propellant is normally a liquid having a boiling temperature not higher than the softening temperature of the thermoplastic polymer shell. Upon heating, the propellant evaporates to increase the internal pressure at the same time as the shell softens, resulting in significant expansion of the microspheres. The temperature at which the expansion starts is called Tₛₜₐᵣₜ, while the temperature at which maximum expansion is reached is called Tₘₐₓ.

Expandable microspheres can be produced by polymerising ethylenically unsaturated monomers in the presence of a propellant. Detailed descriptions of various expandable microspheres and their production can be found in, for example, US 3615972, US 3945956, EP 486080, US 5536756, US 6235800, US 6235394, US 6509384 and US-A1-2002/0132100.

It has been found that microspheres produced according to the above methods may contain unreacted monomers. Some monomers frequently used, such as acrylonitrile, are toxic, and the residual content thereof should preferably be kept low.

US 4147845 discloses a method for reducing the amount of residual monomers in the microspheres by treatment with a polymerisation initiator.

US 4287308 discloses a method for eliminating remaining acrylonitrile monomer by subjecting the microspheres to cyanoethylation, using a compound such as those selected from the group consisting of primary amine, secondary amine, primary alkanolamine, secondary alkanolamine, secondary alkylalkanolamine and sodium sulfide.

US 3998797 discloses a process for producing a co-polymer of styrene and acrylonitrile involving treatment of the co-polymer with an alkaline sulfide or disulfide to react with residual acrylonitrile monomers.

US 4255307 discloses a process for reducing residual acrylonitrile in water dispersions of acrylonitrile polymers with alkali or ammonium sulfite.

US 2960486 discloses a method for reducing the residual acrylamide monomer content of an acrylamide polymer, which comprises forming an aqueous solution of said polymer and incorporation therein as the sole added reactive ingredient a sulfite.

US 3780006 discloses a process for removing residual monomeric acrylamide from a polymer of acrylamide, which comprises contacting said polymer under neutral or acidic conditions with sulfur dioxide in the substantial absence of other substances reactive with sulfur dioxide.

However, it has been found that even if it is possible to obtain microspheres with reasonably low levels of acrylonitrile, there may still remain unsatisfactory amounts of other monomers, like methacrylonitrile and/or methyl methacrylate that sometimes are used for producing microspheres. Furthermore, the microspheres may become discoloured, which is a significant disadvantage in many applications.

It has now surprisingly been found that certain oxo acids of sulfur, or salts or derivatives thereof, may be used for removing residual monomers, such as one or more of acrylonitrile, methacrylonitrile and methyl methacrylate, from thermoplastic microspheres without causing significant problems with discolouration.

Thus, one aspect of the invention concerns a process for the production of expandable thermoplastic microspheres comprising a step of contacting microspheres comprising a thermoplastic polymer shell encapsulating a propellant and further comprising residual monomers, with an agent reacting directly or indirectly with at least part of said residual monomers, wherein said agent is selected from the group consisting of oxo acids of sulfur, salts and derivatives thereof, comprising at least one sulfur atom having at least one free electron pair and binding three oxygen atoms.

The invention also concerns use of an agent selected from the group consisting of oxo acids of sulfur, salts and derivatives thereof, and comprising at least one sulfur atom having at least one free electron pair and binding three oxygen atoms, for eliminating or reducing the amount of residual monomers from expandable thermoplastic microspheres comprising a thermoplastic polymer shell encapsulating a propellant.

The agent may be added as such or be formed in situ through one or more chemical reactions from a precursor. Suitable agents include bisulfites (also called hydrogen sulfites), sulfites and sulfurous acid, of which bisulfites and sulfites are preferred. Suitable counter ions include ammonium and mono- or divalent metal ions such as alkali metal and alkaline earth metal ions. Most preferred are sodium, potassium, calcium, magnesium and ammonium. Also organic compounds comprising any of the above groups may be used, such as alkyl sulfites or dialkyl sulfites. Particularly preferred agents are dimethyl sulfite, sodium bisulfite, sodium sulfite, and magnesium bisulfite.

Examples of precursors include sulfur dioxide, sulfonyl chloride, disulfites (also called metabisulfites or pyrosulfites), ditionites, ditionates, sulfoxylates, e.g. of sodium, potassium or other counter ions as defined above. Preferred precursors are sulfur dioxide, disulfites and ditionites. Particularly preferred precursors are sodium metabisulfite, potassium metabisulfite and sodium ditionite. To the extent corresponding acids exist, they are also useful. The precursors can easily can react to form an active agent as defined above, e.g. by redox reactions and/or by simply being dissolved in an aqueous medium.

It has been found that an agent as defined above reacts directly or indirectly with monomers without negatively affecting important properties of the microspheres, such as the degree of expansion that can be achieved. Furthermore, reaction products remaining on or in the microspheres are less toxic than e.g. acrylonitrile and do not cause any significant problem of discolouration.

The thermoplastic polymer shell of the expandable microspheres to be contacted with the agent is suitably made from homo- or co-polymers obtained by polymerising various ethylenically unsaturated monomers, which to some extent will remain unreacted. Those monomers can, for example, be nitrile containing monomers such as acrylonitrile, methacrylonitrile, α-chloroacrylonitrile, α-ethoxyacrylonitrile, fumaronitrile or crotonitrile; acrylic esters such as methyl acrylate or ethyl acrylate; methacrylic esters such as methyl methacrylate, isobornyl methacrylate or ethyl methacrylate; vinyl halides such as vinyl chloride; vinylidene halides such as vinylidene chloride; vinyl pyridine; vinyl esters such as vinyl acetate; styrenes such as styrene, halogenated styrenes or α-methyl styrene; or dienes such as butadiene, isoprene and chloroprene. Any mixtures of the above mentioned monomers may also be used.

Preferably the monomers comprise at least one of acrylonitrile, methacrylonitrile and methyl methacrylate. Most preferably the monomers comprise at least one of acrylonitrile and methacrylonitrile, particularly most preferably both. The total amount of acrylonitrile in the polymer shell is preferably from 1 up to 100 wt%, most preferably from 20 to 80 wt% The total amount of methacrylonitrile in the polymer shell may be from 0 up to 100 wt%, preferably from 1 up to 100 wt%, most preferably from 20 to 80 wt%. The total amount of methyl methacrylate in the polymer shell may be from 0 up to 100 wt%, preferably from 1 up to 100 wt%, most preferably from 2 to 80 wt%.

The present invention is particularly advantageous when the total amount of nitrile containing monomers used for the polymer shell is at least 60 wt%, preferably at least 70 wt%, more preferably at least 80 wt%, most preferably at least 90 wt%, particularly most preferably at least 95 wt%.

The residual monomers on or in the expandable microspheres may be any one that is used for the polymer shell.

It may sometimes be desirable that the monomers for the polymer shell also comprise crosslinking multifunctional monomers, such as one or more of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal, triallyl isocyanate, triallyl isocyanurate etc.

Preferably the polymer shell constitutes from 60 to 95 wt%, most preferably from 70 to 85 wt% of the total microsphere. If present, crosslinking multifunctional monomers preferably constitute from 0.1 to 10 wt%, most preferably from 0.1 to 1 wt%, particularly most preferably from 0.2 to 0.5 wt% of the total amounts of monomers for the polymer shell.

The propellant is normally a liquid having a boiling temperature not higher than the softening temperature of the thermoplastic polymer shell and may comprise hydrocarbons such as n-pentane, isopentane, neopentane, butane, isobutane, hexane, isohexane, neohexane, heptane, isoheptane, octane or isooctane, or mixtures thereof. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, etc. The boiling point at atmospheric pressure may be within a wide range, preferably from -20 to 150°C, most preferably from -20 to 100°C. The propellant suitably makes up from 5 to 40 wt % of the microsphere.

Apart from the polymer shell and the propellant the microspheres may comprise further substances added during the production thereof, normally in an amount from 1 to 20 wt%, preferably from 2 to 10 wt%. Examples of such substances are solid suspending agents, such as one or more of silica, chalk, bentonite, starch, crosslinked polymers, methyl cellulose, gum agar, hydroxypropyl methylcellulose, carboxy methylcellulose, colloidal clays, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. If present, these solid suspending agents are normally mainly located to the outer surface of the polymer shell. However, even if a suspending agent has been added during the production of the microspheres, this may have been washed off at a later stage and could thus be substantially absent from the final product.

The expandable microspheres as described above, comprising residual monomers, are suitably produced by polymerising ethylenically unsaturated monomers in a preferably aqueous suspension in the presence of a propellant to yield microspheres comprising a homo- or co-polymer shell entrapping said propellant. The methods disclosed in the earlier mentioned US 3615972, US 3945956, EP 486080, US 5536756, US 6235800, US 6235394 and US 6509384 are all applicable.

In a preferred batchwise procedure for producing expandable microspheres, the polymerisation is conducted as described below in a reaction vessel. For 100 parts of monomer phase (suitably including monomers and propellant), one or more polymerisation initiator, preferably in an amount from 0.1 to 5 parts, aqueous phase, preferably in an amount from 100 to 800 parts, and one or more preferably solid colloidal suspending agent, preferably in an amount from 1 to 20 parts, are mixed and homogenised. The monomers may be added all at once or in portions, added to the mixture at any time from the start to the late stages of the polymerisation. If more than one kind of monomers are used, it may sometimes be favourable to add the different kinds of monomers at different stages. The temperature may be maintained substantially constant or be varied during the polymerisation, example be increased or decreased during various phases. The temperature profiles are suitably maintained from 40 to 90°C, preferably from 50 to 80°C. The suitable pH depends on the suspending agent used. For example, alkaline pH, preferably from 7 to 12, most preferably from 8 to 10, is suitable if the suspending agent is selected from salts, oxides or hydroxides of metals like Al, Ca, Mg, Ba, Fe, Zn, Ni and Mn, for example one or more of calcium phosphate, calcium carbonate, chalk, magnesium hydroxide, barium sulphate, calcium oxalate, and hydroxides of aluminium, iron, zinc, nickel or manganese. Acidic pH, preferably from 1 to 6, most preferably from 3 to 5, is suitable if the suspending agent is selected from silica, bentonite, starch, methyl cellulose, gum agar, hydroxypropyl methylcellulose, carboxy methylcellulose, colloidal clays. Each one of the above agents have different optimal pH, depending on solubility data.

In order to enhance the effect of the suspending agent, it is also possible to add small amounts of one or more promoters, for example from 0.001 to 1 wt%. Usually, such promoters are organic materials and may, for example, be selected from one or more of water-soluble sulfonated polystyrenes, alginates, carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, polyvinylalcohol, polyvinylpyrrolidone, amphoteric materials such as proteinaceous, materials like gelatin, glue, casein, albumin, glutin and the like, non-ionic materials like methoxycellulose, ionic materials normally classed as emulsifiers, such as soaps, alkyl sulfates and sulfonates and the long chain quaternary ammonium compounds.

Conventional radical polymerisation may be used and initiators are suitably selected from one or more of organic peroxides such as dialkyl peroxides, diacyl peroxides, peroxy esters, peroxy dicarbonates, or azo compounds. Suitable initiators include dicetyl peroxy dicarbonate, tert-butyl cyclohexyl peroxy dicarbonate, dioctanyl peroxide, dibenzoyl peroxide, dilauroyl peroxide, didecanoyl peroxide, 2,5-dimethyl-2,5-di(2-ethylhexanoylperoxy)hexane, 1,1,3,3-tetramethylbutyl peroxy-2-ethylhexanoate, tert-butyl peracetate, tert-butyl perlaurate, tert-butyl perbenzoate, tert-butyl hydroperoxide, cumene hydroperoxide, cumene ethylperoxide, diisopropyl hydroxy dicarboxylate, azo-bis dimethyl valeronitrile, azo-bis isobutyronitrile, azo-bis (cyclo hexyl carbonitrile) and the like. It is also possible to initiate the polymerisation with radiation, such as high energy ionising radiation.

When the polymerisation is essentially complete, microspheres are normally obtained as an aqueous slurry or dispersion, which can be dewatered by any conventional means, such as bed filtering, filter pressing, leaf filtering, rotary filtering, belt filtering or centrifuging, and then dried by any conventional means, such as spray drying, shelf drying, tunnel drying, rotary drying, drum drying, pneumatic drying, turbo shelf drying, disc drying or fluidised bed-drying.

During the step of contacting the microspheres with the agent for reacting with residual monomers, the microspheres are preferably in the form of an aqueous slurry or dispersion, preferably comprising from 0.1 to 50 wt% microspheres, most preferably from 0.5 to 40 wt% microspheres, while the agent is preferably dissolved in the liquid phase, preferably at a concentration from 0.1 wt% up to the saturation limit, most preferably from 1 to 40 wt%. However, the microspheres could alternatively be suspended in any other liquid medium which dissolves the agent, or mixtures thereof. Preferably, the slurry or dispersion originates from the polymerisation mixture in which the microspheres have been produced.

Without being bound to any theory, it is believed that addition of an agent or precursor as earlier defined result in a solution comprising sulfite or bisulfite, which in turn reacts with the monomers.

The amount of agent, expressed as moles sulfur atoms having at least one free electron pair and binding three oxygen atoms, compared to the molar amount of residual monomers, is preferably at least about equimolar, more preferably from about equimolar to 200% excess, most preferably from about equimolar to 50% excess on a molar basis, particularly most preferably from about equimolar to 25% excess on a molar basis. If the slurry or dispersion originates from the polymerisation mixture and thus contains residual monomer also in the liquid phase, these monomers have to be taken into account in addition to those present in or on the microspheres.

The agent or precursor for the agent reacting with residual monomers may be added during the production of the microspheres, optionally when the polymerisation still is running, although it is preferred that at the time for addition of the agent or precursor the polymerisation is almost complete and less than 15 % preferably less than 10% residual monomers remain. The agent or precursor is preferably added when the microspheres has formed but still are in a slurry or dispersion and most preferably when they still are in the same reaction vessel as the polymerisation has been conducted in.

Alternatively, the agent or precursor may be added to the microspheres in a separate step after the microspheres have been removed from the polymerisation reactor, optionally after any of subsequent operations such as dewatering, washing or drying. The non-treated microspheres comprising residual monomers could then be regarded as an intermediate product, which optionally can be transported to another location and there being brought into contact with the agent for removing residual monomers.

In any of the above options, the agent or precursor may be added all at once or in portions.

In addition to the above described agent or precursor, also a polymerisation initiator may be added, preferably a Water-soluble initiator such as hydrogen peroxide, ammonium or potassium or sodium persulfates, hydroperoxides, cyclohexanon peroxide or methyl isobutyl ketone. It is also possible to add sulfate or any other salt of transition metal ions such as Fe²⁺, Ag⁺, Ti³⁺ or Cu⁺, optionally together with a polymerisation initiator such as those mentioned above.

The pH during the step of contacting the microspheres with the agent is preferably from 3 to 12, most preferably from 3.5 to 10. The temperature during said step is preferably from 20 to 100°C, most preferably from 50 to 100°C, particularly most preferably from 60 to 90°C. The pressure during said step is preferably from 1 to 20 bar (absolute pressure), most preferably from 1 to 15 bar. The time for said step is preferably at least 5 minutes, most preferably at least 1 hr. There is no critical upper limit, but for practical and economic reasons the time is preferably from 1 to 10 hours, most preferably from 2 to 5 hours. After said step, the microspheres preferably are dewatered, washed and dried by any suitable conventional means.

The invention further concerns expandable thermoplastic microspheres obtainable by the above method. These microspheres have both high brightness and low content of residual monomers. They may also comprise reaction products formed during the process.

The invention thus also concerns expandable thermoplastic microspheres comprising a thermoplastic polymer shell encapsulating a propellant and further comprising at least one non-polymeric reaction product of at least one monomer used for the polymer shell and an agent selected from the group consisting of oxo acids of sulfur, salts and derivatives thereof, comprising at least one sulfur atom having at least one free electron pair and binding three oxygen atoms. Regarding preferred agents and monomers the above description of the process of the invention is referred to.

The invention further concerns expandable thermoplastic microspheres comprising a thermoplastic polymer shell encapsulating a propellant and further comprising at least one reaction product selected from the group consisting of salts and derivatives of sulfonic acid anion as defined in any one of the Formulas I or II: 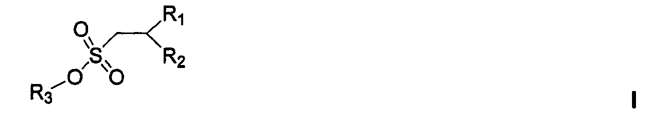 where R₁ is a nitrile, carboxy ester, carboxy amide, carboxy acid or aryl group, and R₂ and R₃, independently of each other, is hydrogen or an alkyl group, preferably having from 1 to 4 carbon atoms; 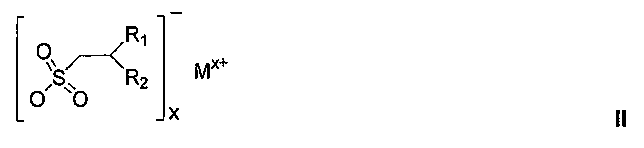 where R₁ is a nitrile, carboxy ester, carboxy amide, carboxy acid or aryl group, R₂ is a hydrogen or alkyl group, preferably having from 1 to 4 carbon atoms, and M^{x+} is a cation having a valency of x (in most cases 1 or 2), preferably anyone of sodium, potassium, magnesium or ammonium.

Examples of substances according to Formula I are 2-cyano-ethanesulfonic acid, 2-cyano-2-methyl-ethanesulfonic acid, 2-aryl-ethanesulfonic acid, 2-methoxycarbonyl-ethanesulfonic acid, 2-methoxycarbonyl 2-methyl-ethanesulfonic acid, 2-carboxy-ethanesulfonic acid, 2-carbamoyl-ethanesulfonic acid, 2-cyano-ethanesulfonic acid methyl ester, 2-cyano-2-methyl-ethanesulfonic acid methyl ester, 2-methoxycarbonyl-ethanesulfonic acid methyl ester, 2-methoxycarbonyl-2-methyl-ethanesulfonic acid methyl ester and 2-carboxy-ethanesulfonic acid methyl ester. Examples of substances according to Formula II are sodium, potassium, magnesium and ammonium salts of 2-cyano-ethanesulfonate, 2-cyano-2-methyl-ethanesulfonate, 2-aryl-ethanesulfonate, 2-methoxycarbonyl-ethanesulfonate, 2-methoxycarbonyl 2-methyl-ethanesulfonate, 2-carboxy-ethanesulfonate, and 2-carbamoyl-ethanesulfonate.

The expandable microspheres of the invention are preferably essentially white, preferably having a brightness according to ISO 2470 of at least 70%, more preferably at least 75%, most preferably at least 79%, particularly most preferably at least 85%. Through the invention it is possible to obtain microspheres with as high brightness as 90% or 95%, or even almost 100%.

The expandable microspheres of the invention preferably comprises less than 400 ppm, more preferably less than 200 ppm, most preferably less than 100 ppm, particularly most preferably less than 60 ppm, optimally less than 30 ppm of residual nitrile containing monomers. For acrylonitrile, the amount of residual monomer is preferably below 100 ppm, most preferably below 30 ppm, particularly most preferably below 15 ppm. For methacrylonitrile the amount of residual monomer is preferably below 200 ppm, more preferably below 100 ppm, most preferably below 30 ppm, particularly most preferably below 15 ppm. Methyl methacrylate is less harmful and higher residual content thereof can be tolerated. The amount of residual methyl methacrylate monomer is preferably below 400 ppm, most preferably below 200 ppm, particularly most preferably below 100 ppm.

It has not previously been possible to produce expandable thermoplastic microspheres having both high brightness and low residual monomer content, particularly not microspheres made from a high amount of nitrile containing monomers.

Through the invention it is possible to produce expandable thermoplastic microspheres comprising a thermoplastic polymer shell encapsulating a propellant, said polymer shell being made of a homo- or co-polymer from ethylenically unsaturated monomers, said microspheres comprising less than 100 ppm, preferably less than 60 ppm, particularly most preferably less than 30 ppm residual nitrile containing monomers and having a brightness according to ISO 2470 of at least 75%, preferably at least 79%, most preferably at least 85%. The total amount of nitrile containing monomers for the polymer shell is preferably at least 70 wt%, more preferably at least 80 wt%, most preferably at least 90 wt%, particularly most preferably at least 95 wt%. The nitrile containing monomers preferably comprises at least one of acrylonitrile and methacrylonitrile, most preferably at least acrylonitrile, particularly most preferably both acrylonitrile and methacrylonitrile.

The unit "ppm" as used herein always refers to ppm on a weight basis.

The brightness refer to true values obtained without any glass or other sample holder reducing the measured reflectance.

The expandable microspheres of the invention preferably have Tₛₜₐᵣₜ within the range of from 50 to 200°C, most preferably from 70 to 200°C, while Tₘₐₓ suitably is within the range of from 75 °C to 300°C, preferably from 100 to 250°C.

The volume weighted average particle size of the expandable microspheres is suitably from 1 to 500 µm, preferably from 1 to 200 µm, most preferably from 3 to 100 µm, particularly most preferably from 5 to 50 µm. By heating to a temperature above Tₛₜₐᵣₜ, it is normally possible to expand the microspheres from 2 to 7 times, preferably from 4 to 7 times, their diameter.

Regarding other aspects of the microspheres of the invention, such as suitable and preferred composition of the polymer shell, propellant, etc, it is referred to applicable parts of the description of the process for their preparation.

The expandable microspheres of the invention can be used as a foaming agent in a wide range of applications, including printing inks, putties, sealants, underbody coatings, adhesives, artificial leather, genuine leather, paint, non-woven materials, paper and board, coatings for paper and board, explosives, cable insulations, plastisols, thermoplastics (such as polypropylene, polyethylene, polystyrene, polyvinyl chloride, ethylene-vinylacetate, acrylonitrile-butadiene-styrene) or thermoplastic elastomers (such as styrene-ethylene-butene-styrene thermoplastic elastomer, styrene-ethylene-butene-styrene thermoplastic elastomer, thermoplastic polyurethanes, thermoplastic polyolefins), styrene-butadiene rubber, vulcanised rubber, silicone rubbers, thermosetting polymers (such as epoxies, polyurethanes and polyesters). The microspheres have been found to be particularly advantageous for use as a foaming agent in applications involving high temperatures, such as in many working methods of thermoplastics and thermoplastic elastomers, where it has been found possible to achieve both high expansion and low degree of discolouration. Such working methods for thermoplastics and thermoplastic elastomers are, for example, calendering, injection moulding, extrusion, blow moulding or rotational moulding.

The invention will now be further illustrated with the following examples, which, however, not should be interpreted as limiting the scope of the invention. If not otherwise stated, all parts and percentages refer to parts and percent by weight.

In all the Examples the brightness of the microspheres has been measured according to ISO 2470 with a Zeiss Elrepho Reflectometer; measurement of diffuse blue reflectance factor, light with a wavelength of 457 nm and using reference paper 59,65. However, due to the need of a sample holder for powders, the reflectance of the microspheres could only be measured through a glass disc, giving a decrease of the reflectance of 11 % (units of percent). Thus, the numbers in Tables 1-4 are given with the reduction of the reflectance included, meaning that the true values for the brightness are about 11 units of percent higher.

The pH given in Tables 1 and 2 refer to the approximate values when the reactions start.

Example 1: An aqueous dispersion of expandable microspheres, stabilised with magnesium hydroxide colloidal articles, was prepared and polymerised as described in US 6509384. Acrylonitrile (ACN) and methacrylonitrile (MAN) were used as monomers and isopentane was used as blowing agent. After polymerisation, the residual content of acrylonitrile in the dispersion was about 11600-12400 ppm and the residual content of methacrylonitrile was about 200-400 ppm. 150 g of the dispersion was immersed into a 250 ml glass container and 100 % molar excess of reactant relative acrylonitrile content (see Table 1) was added. The container was sealed and heated to 75°C for 5 hours. As a comparison, a blank was treated in the same way except adding reactant. After cooling, the microspheres were filtered, washed and dried. Thereafter the residual monomer content of the microspheres was measured by gas chromatography and the brightness was measured as stated above. Finally, it was tested if the degree of expansion or any other important properties had been negatively affected by the treatment. The results are shown in Table 1.

**Table 1. Acrylonitrile-methacrylonitrile copolymer microspheres treated at 75°C for 5 hours. Brightness of material before treatment is 68.8 %.**

| Reactant | pH | Residual ACN content (ppm) | Residual MAN content (ppm) | Brightness (%) | Comments |
|---|---|---|---|---|---|
| Ammonia | 10.1 | 1380 | 792 | 63.8 | |
| Benzene sulfinic acid | 9.8 | 4790 | 296 | 64.8 | |
| Benzene sulfonic amide | 9.5 | 4240 | 270 | 57.3 | less expansion |
| Dimethyl malonate | 9.3 | 4130 | 173 | 68.8 | smelly; less expansion |
| Dimethyl phosphonate | 8.4 | 10100 | 291 | 69.6 | less expansion |
| Dimethyl sulfite | 9.5 | <30 | 72 | 65.8 | |
| Dimethyl thiourea | 9.5 | 10000 | 758 | 64.5 | |
| Diphenyl sulfoxide | 9.5 | 2550 | 174 | 65.6 | poor expansion |
| Ethylphenyl phosphinate | 7.8 | 4700 | 283 | 69.4 | |
| Magnesium bisulfite | 5.9 | <30 | <30 | 67.2 | |
| Potassium metabisulfite | 7.1 | <30 | <30 | 67.1 | |
| Sodium ditionite | 10.4 | 47 | 470 | 66.1 | |
| Sodium sulfide | 13.6 | <30 | 246 | 3.5 | dark red colour; bad smell |
| Sodium thiosulfate | 10.1 | 2560 | 320 | 65.7 | green colour |
| Sulfuric acid | 0.3 | 9680 | 324 | 70.3 | |
| Blank | 9.2-9.8 | 7830 -13400 | 184 - 583 | 67.8 - 68.8 | |

As shown above, it was found that all the tested agents and precursors of the invention, i.e. sulfites, bisulfites, ditionites and metabisulfites, gave a significant reduction of monomers with remaining high brightness of the microspheres.

Example 2: A dispersion was prepared and polymerised as described in Example 1. After polymerisation, the residual content of unreacted acrylonitrile in the dispersion was 11300-12400 ppm and the residual content of unreacted methacrylonitrile was 200 - 400 ppm. A sample was immersed into a 250 ml glass container and equimolar or 100 % molar excess of sodium metabisulfite (where acrylonitrile : sodium metabisulfite = 1:0.5 this represents equimolarity based on the number of sulfur atoms), or 100 % molar excess of sodium sulfite was added as reactant (see Table 2). The container was sealed and heated to 70-80°C for 5 hours. The reactions were run at pH 4.0 - 11.3. As a comparison, a blank was treated in the same way except adding the reactant. After cooling, the microspheres were filtered, washed and dried. The residual monomer content and the brightness of the microspheres were measured as described in Example 1. The results are shown in Table 2.

**Table 2. Acrylonitrile-methacrylonitrile copolymer microspheres treated at various temperatures and pH for 5 hours. Brightness of material before treatment is 68.8 %. I = Sodium metabisulfite; II = Sodium sulfite**

| Reactant | Temp. (°C) | pH | Molar ratio ACN:reactant | Residual ACN in microspheres (ppm) | Residual MAN in Vmicrospheres (ppm) | Brightness (%) |
|---|---|---|---|---|---|---|
| I | 70 | 9.9 | 1 : 0.5 | 36 | 121 | 67.4 |
| I | 70 | 6.4 | 1 : 1.0 | 35 | 101 | 67.6 |
| I | 75 | 9.9 | 1 : 0.5 | <30 | 49 | 65.9 |
| I | 75 | 6.4 | 1 : 1.0 | <30 | 37 | 66.7 |
| I | 80 | 9.9 | 1 : 0.5 | <30 | <30 | 64.3 |
| I | 80 | 6.4 | 1 : 1.0 | <30 | <30 | 67.2 |
| I | 75 | 4.0 | 1 : 1.0 | <30 | 333 | 70.0 |
| I | 75 | 7.0 | 1 : 1.0 | <30 | 140 | 67.7 |
| I | 75 | 10.0 | 1 : 1.0 | <30 | 148 | 67.4 |
| II | 75 | 4.0 | 1 : 2.0 | <30 | 286 | 70.5 |
| II | 75 | 7.1 | 1 : 2.0 | <30 | 181 | 68.2 |
| II | 75 | 10.1 | 1 : 2.0 | <30 | 218 | 55.5 |
| II | 75 | 11.3 | 1 : 2.0 | <30 | 53 | 53.4 |
| blank | 80 | | | 8370 | 281 | 67.0 |

As shown above, the residual monomer content was found to decrease with increased temperature and increased amount of reactant. For acrylonitrile-methacrylonitrile copolymer microspheres, brightness is not reduced by the treatment with sodium metabisulfite. At very high pH-values (10.1 and 11.3), some discoloration could be seen for sodium sulfite. The expansion properties of the microspheres was not effected by the treatments.

Example 3: A dispersion, stabilised with magnesium hydroxide, was prepared and polymerised as described in Example 1, with the exception that acrylonitrile and methyl methacrylate (MMA) were used as monomers and isobutane as propellant. After polymerisation, the residual content in the dispersion of unreacted acrylonitrile was 6560 ppm and the content of methyl methacrylate was 250 ppm. 150 g of the dispersion was immersed into a 250 ml glass container and equimolar, 220% or 440% excess of sodium metabisulfite was added. The container was sealed and heated to 60 or 70°C for 5 hours. The microspheres were analysed as in Example 1, and the results appear in Table 3.

**Table 3. Acrylonitrile-methyl methacrylate copolymer microspheres treated with sodium metabisulfite for 5 hours. Brightness of material before treatment is 76.4 %.**

| Temperature (°C) | Molar ratio ACN:reactant | Residual ACN in microspheres (ppm) | Residual MMA in microspheres (ppm) | Brightness (%) |
|---|---|---|---|---|
| 60 | 1 : 0,5 | <30 | 685 | 76.4 |
| 60 | 1 : 1,6 | <30 | 237 | 78.1 |
| 60 | 1 : 2.7 | <30 | 184 | 78.6 |
| 70 | 1 : 0,5 | <30 | 372 | 75.2 |
| 70 | 1 : 1,6 | <30 | 71 | 78.2 |
| 70 | 1 : 2.7 | <30 | 66 | 78.4 |

As shown above, it was found possible to reduce methyl methacrylate in addition to acrylonitrile. The expansion properties of the microspheres was not effected by the treatments.

Example 4: A dispersion, stabilised with silica colloid, was prepared essentially as described in Example 1 of US 3615972. Acrylonitrile and methyl methacrylate were used as monomers and isobutane was used as propellant. After polymerisation, the residual content in the dispersion of unreacted acrylonitrile was 13700 ppm and the content of methyl methacrylate was 380 ppm. 240 g of the dispersion was immersed into a 250 ml glass container and equimolar or 200 % molar excess of sodium metabisulfite was added. The container was sealed and heated to 50-70°C for 3 or 5 hours. The reaction was run at pH 4.6. As a comparison, a blank was treated in the same way except adding the reactant. The microspheres were analysed as in Example 1, and the results appear in Table 4.

**Table 4. Acrylonitrile/mefihyl methacrylate copolymer microspheres treated at pH 4.6. Brightness of material before treatment is 73.1 %.**

| Temperature (°C) | Time (h) | Molar ratio ACN: reactant | Residual ACN in microspheres (ppm) | Residual MMA in microspheres (ppm) | Brightness (%) |
|---|---|---|---|---|---|
| 50 | 5 | 0.5 | 107 | 1400 | 73.9 |
| 50 | 5 | 1.5 | < 30 | 1130 | 74.4 |
| 60 | 3 | 1.0 | < 30 | 980 | 74.2 |
| 70 | 5 | 0.5 | < 30 | 1120 | 74.2 |
| 70 | 5 | 1.5 | < 30 | 446 | 75.0 |
| 60 | 3 | no reactant | 2700 | 1490 | 73.1 |

As shown above, it was found possible to reduce methyl methacrylate in addition to acrylonitrile. The expansion properties of the microspheres was not effected by the treatments.

## Claims

1. A process for the production of expandable thermoplastic microspheres comprising a step of contacting microspheres comprising a thermoplastic polymer shell encapsulating a propellant and further comprising residual monomers, with an agent reacting directly or indirectly with at least part of said residual monomers, wherein said agent is selected from the group consisting of oxo acids of sulfur, salts and derivatives thereof, comprising at least one sulfur atom having at least one free electron pair and binding three oxygen atoms.

2. A process for eliminating or reducing residual monomers from thermoplastic expandable microspheres comprising a thermoplastic polymer shell encapsulating a propellant and further comprising residual monomers, the process comprising a step of contacting said microspheres with an agent selected from the group consisting of oxo acids of sulfur, salts and derivatives thereof, comprising at least one sulfur atom having at least one free electron pair and binding three oxygen atoms.

3. A process as claimed in any one of the claims 1 or 2, wherein said agent is selected from the group consisting of bisulfites, sulfites and sulfurous acid.

4. A process as claimed in claim 3, wherein said agent is selected from the group consisting of bisulfites and sulfates.

5. A process as claimed in any one of the claims 1-4, wherein said agent is formed in situ from a precursor.

6. A process as claimed in claim 5, wherein said precursor is selected from the group consisting of disulfites, ditionites and sulfur dioxide.

7. A process as claimed in any one of the claims 1-6, wherein the expandable microspheres during the step of contacting them with the agent for reacting with residual monomers are in the form of an aqueous slurry or dispersion originating from a polymerisation mixture in which the microspheres have been produced.

8. A process as claimed in any one of the claims 1-7, wherein the residual monomers comprise at least one of acrylonitrile, methacrylonitrile and methyl methacrylate.

9. A process as claimed in any one of the claims 1-8, wherein the residual monomers comprise at least one of acrylonitrile and methacrylonitrile.

10. A process as claimed in any one of the claims 1-9, wherein the thermoplastic polymer shell of the expandable microspheres is made from a homo- or copolymer obtained by polymerising ethylenically unsaturated monomers, of which the total amount of nitrile containing monomers is at least 70 wt%.

11. Expandable thermoplastic microspheres comprising a thermoplastic polymer shell encapsulating a propellant and further comprising at least one non-polymeric reaction product of at least one monomer used for the polymer shell and an agent selected from the group consisting of oxo acids of sulfur, salts and derivatives thereof, comprising at least one sulfur atom having at least one free electron pair and binding three oxygen atoms.

12. Expendable thermoplastic microspheres as claimed in claim 11 comprising a thermoplastic polymer shell encapsulating a propellant and further comprising at least one reaction product selected from the group consisting of salts and derivatives of sulfonic acid anion as defined in any one of Formula I: 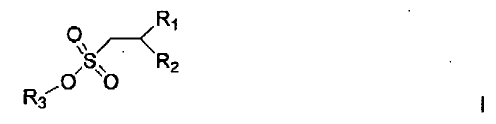 where R₁ is a nitrile, carboxy ester, carboxy amide, carboxy acid or aryl group, and R₂ and R₃, independently of each other, is hydrogen or an alkyl group;
or
Formula II: 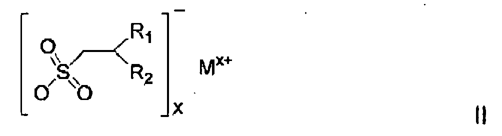 where R₁ is a nitrile, carboxy ester, carboxy amide, carboxy acid or aryl group, R₂ is a hydrogen or alkyl group, and M^{x+} is a cation having a valency of x.

13. Expandable thermoplastic microspheres as claimed in claim 12, wherein said salt or derivative of sulfonic acid anion is selected from the group consisting of 2-cyano-ethanesulfonic acid, 2-cyano-2-methyl-ethanesulfonic acid, 2-aryl-ethanesulfonic acid, 2-methoxycarbonyl-ethanesulfonic acid, 2-methoxycarbonyl 2-methyl-ethanesulfonic acid, 2-carboxy-ethanesulfonic acid, 2-carbamoyl-ethanesulfonic acid, 2-cyano-ethanesulfonic acid methyl ester, 2-cyano-2-methyl-ethanesulfonic acid methyl ester, 2-methoxycarbonyl-ethanesulfonic acid methyl ester, 2-methoxycarbonyl-2-methyl-ethanesulfonic acid methyl ester, 2-carboxy-ethanesulfonic acid methyl ester, sodium, potassium, magnesium and ammonium salts of any one of 2-cyano-ethanesulfonate, 2-cyano-2-methyl-ethanesulfonate, 2-aryl-ethanesulfonate, 2-methoxycarbonyl-ethanesulfonate, 2-methoxycarbonyl 2-methyl-ethanesulfonate, 2-carboxy-ethanesulfonate, and 2-carbamoyl-ethanesulfonate.

## Patentansprüche

1. Verfahren zur Herstellung von expandierbaren thermoplastischen Mikrosphären, umfassend einen Schritt des In-Kontakt-Bringens von Mikrosphären, die eine Hülle aus einem thermoplastischen Polymer umfassen, die ein Treibmittel einschließt und weiterhin restliche Monomere umfasst, mit einem Mittel, das direkt oder indirekt mit wenigstens einem Teil der restlichen Monomere reagiert, wobei das Mittel aus der Gruppe ausgewählt ist, die aus Oxosäuren des Schwefels, Salzen und Derivaten davon, die wenigstens ein Schwefelatom mit wenigstens einem freien Elektronenpaar, das drei Sauerstoffatome bindet, umfassen, besteht.

2. Verfahren zum Entfernen oder Reduzieren von restlichen Monomeren aus thermoplastischen expandierbaren Mikrosphären, die eine Hülle aus einem thermoplastischen Polymer umfassen, die ein Treibmittel einschließt und weiterhin restliche Monomere umfasst, wobei das Verfahren einen Schritt des In-Kontakt-Bringens der Mikrosphären mit einem Mittel umfasst, das aus der Gruppe ausgewählt ist, die aus Oxosäuren des Schwefels, Salzen und Derivaten davon, die wenigstens ein Schwefelatom mit wenigstens einem freien Elektronenpaar, das drei Sauerstoffatome bindet, umfassen, besteht.

3. Verfahren gemäß einem der Ansprüche 1 oder 2, wobei das Mittel aus der Gruppe ausgewählt ist, die aus Hydrogensulfiten, Sulfiten und Schwefliger Säure besteht.

4. Verfahren gemäß Anspruch 3, wobei das Mittel aus der Gruppe ausgewählt ist, die aus Hydrogensulfiten und Sulfiten besteht.

5. Verfahren gemäß einem der Ansprüche 1 bis 4, wobei das Mittel in situ aus einem Vorläufer gebildet wird.

6. Verfahren gemäß Anspruch 5, wobei der Vorläufer aus der Gruppe ausgewählt ist, die aus Disulfiten, Dithioniten und Schwefeldioxid besteht.

7. Verfahren gemäß einem der Ansprüche 1 bis 6, wobei die expandierbaren Mikrosphären während des Schritts des In-Kontakt-Bringens derselben mit dem Mittel zum Umsetzen mit restlichen Monomeren in Form einer wässrigen Aufschlämmung oder Dispersion vorliegen, die aus einem Polymerisationsgemisch stammt, in dem die Mikrosphären hergestellt wurden.

8. Verfahren gemäß einem der Ansprüche 1 bis 7, wobei die restlichen Monomere wenigstens eines der Monomere Acrylnitril, Methacrylnitril und Methylmethacrylat umfassen.

9. Verfahren gemäß einem der Ansprüche 1 bis 8, wobei die restlichen Monomere wenigstens eines der Monomere Acrylnitril und Methacrylnitril umfassen.

10. Verfahren gemäß einem der Ansprüche 1 bis 9, wobei die aus thermoplastischem Polymer bestehende Hülle der expandierbaren Mikrosphären aus einem Homo- oder Copolymer hergestellt wird, das durch Polymerisieren von ethylenisch ungesättigten Monomeren erhalten wird, wobei die Gesamtmenge der nitrilhaltigen Monomere wenigstens 70 Gew.-% beträgt.

11. Expandierbare thermoplastische Mikrosphären, die eine Hülle aus einem thermoplastischen Polymer, die ein Treibmittel einschließt und weiterhin wenigstens ein nichtpolymeres Reaktionsprodukt wenigstens eines Monomers umfasst, das für die Polymerhülle verwendet wird, und ein Mittel umfassen, das aus der Gruppe ausgewählt ist, die aus Oxosäuren des Schwefels, Salzen und Derivaten davon, die wenigstens ein Schwefelatom mit wenigstens einem freien Elektronenpaar, das drei Sauerstoffatome bindet, umfassen, besteht.

12. Expandierbare thermoplastische Mikrosphären gemäß Anspruch 11, die eine Hülle aus einem thermoplastischen Polymer umfassen, die ein Treibmittel einschließt und weiterhin wenigstens ein Reaktionsprodukt umfasst, das aus der Gruppe ausgewählt ist, die aus Salzen und Derivaten von Sulfonsäureanion besteht, wie es definiert ist in Formel I: 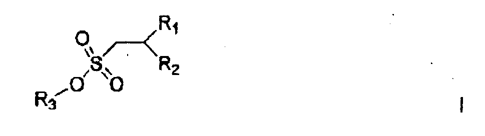 wobei R₁ eine Nitril-, Carbonsäureester-, Carbonsäureamid-, Carbonsäure- oder Arylgruppe ist und R₂ und R₃ unabhängig voneinander Wasserstoff oder eine Alkylgruppe sind;
oder Formel II: 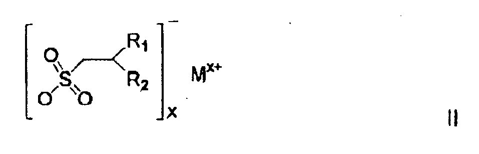 wobei R₁ eine Nitril-, Carbonsäureester-, Carbonsäureamid-, Carbonsäure- oder Arylgruppe ist, R₂ Wasserstoff oder eine Alkylgruppe ist und M^{x+} ein Kation mit einer Valenz von x ist.

13. Expandierbare thermoplastische Mikrosphären gemäß Anspruch 12, wobei das Salz oder Derivat des Sulfonsäureanions aus der Gruppe ausgewählt ist, die aus 2-Cyanoethansulfonsäure, 2-Cyano-2-methylethansulfonsäure, 2-Arylethansulfonsäure, 2-Methoxycarbonylethansulfonsäure, 2-Methoxycarbonyl-2-methylethansulfonsäure, 2-Carboxyethansulfonsäure, 2-Carbamoylethansulfonsäure, 2-Cyanoethansulfonsäuremethylester, 2-Cyano-2-methylethansulfonsäuremethylester, 2-Methoxycarbonylethansulfonsäuremethylester, 2-Methoxycarbonyl-2-methylethansulfonsäuremethylester, 2-Carboxyethansulfonsäuremethylester, Natrium-, Kalium-, Magnesium- und Ammoniumsalzen von 2-Cyanoethansulfonat, 2-Cyano-2-methylethansulfonat, 2-Arylethansulfonat, 2-Methoxycarbonylethansulfonat, 2-Methoxycarbonyl-2-methylethansulfonat, 2-Carboxyethansulfonat und 2-Carbamoylethansulfonat besteht.

## Revendications

1. Procédé de production de microsphères thermoplastiques expansibles comprenant une étape de mise en contact de microsphères comprenant une coque en polymère thermoplastique encapsulant un propulseur et comprenant en outre des monomères résiduels avec un agent réagissant directement ou indirectement avec au moins une partie desdits monomères résiduels, dans lequel ledit agent est choisi dans le groupe constitué par les oxo acides de soufre, leurs sels et leurs dérivés, comprenant au moins un atome de soufre ayant au moins une paire d'électrons libres et lié à trois atomes d'oxygène.

2. Procédé d'élimination ou de réduction de monomères résiduels de microsphères thermoplastiques expansibles comprenant une coque en polymère thermoplastique encapsulant un propulseur et comprenant en outre des monomères résiduels, le procédé comprenant l'étape de mise en contact desdites microsphères avec un agent choisi dans le groupe constitué par les oxo acides de soufre, leurs sels et leurs dérivés, comprenant au moins un atome de soufre ayant au moins une paire d'électrons libres et lié à trois atomes d'oxygène.

3. Procédé selon l'une quelconque des revendications 1 ou 2, dans lequel ledit agent est choisi dans le groupe constitué par les bisulfites, les sulfites et un acide sulfureux.

4. Procédé selon la revendication 3, dans lequel ledit agent est choisi dans le groupe constitué par les bisulfites et les sulfites.

5. Procédé selon l'une quelconque des revendications 1 à 4, dans lequel ledit agent est formé *in situ* à partir d'un précurseur.

6. Procédé selon la revendication 5, dans lequel ledit précurseur est choisi dans le groupe constitué par les disulfites, les dithionites et le dioxyde de soufre.

7. Procédé selon l'une quelconque des revendications 1 à 6, dans lequel les microsphères expansibles lors de l'étape consistant à les mettre en contact avec l'agent pour réaliser la réaction avec les monomères résiduels sont sous la forme d'une suspension ou dispersion aqueuse provenant d'un mélange de polymérisation dans lequel les microsphères ont été produites.

8. Procédé selon l'une quelconque des revendications 1 à 7, dans lequel les monomères résiduels comprennent au moins un monomère choisi parmi l'acrylonitrile, le méthacrylonitrile et le méthacrylate de méthyle.

9. Procédé selon l'une quelconque des revendications 1 à 8, dans lequel les monomères résiduels comprennent au moins un monomère choisi parmi l'acrylonitrile et le méthacrylonitrile.

10. Procédé selon l'une quelconque des revendications 1 à 9, dans lequel la coque en polymère thermoplastique des microsphères expansibles est préparée à partir d'un homo- ou co-polymère obtenu en polymérisant des monomères à insaturation éthylénique, parmi lesquels la quantité totale de monomères contenant un nitrile est d'au moins 70 % en poids.

11. Microsphères thermoplastiques expansibles comprenant une coque en polymère thermoplastique encapsulant un propulseur et comprenant en outre au moins un produit non polymère issu de la réaction entre au moins un monomère utilisé pour la coque en polymère et un agent choisi dans le groupe constitué par les oxo acides de soufre, leurs sels et leurs dérivés, comprenant au moins un atome de soufre ayant au moins une paire d'électrons libres et lié à trois atomes d'oxygène.

12. Microsphères thermoplastiques expansibles selon la revendication 11, comprenant une coque en polymère thermoplastique encapsulant un propulseur et comprenant en outre au moins un produit réactionnel choisi dans le groupe constitué par les sels et les dérivés d'un anion d'acide sulfonique de formule 1 : 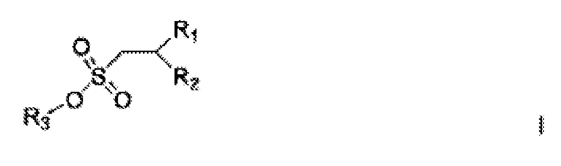 dans laquelle R₁ est un nitrile, un carboxy ester, un carboxy amide, un carboxy acide ou un groupe aryle, et R₂ et R₃, indépendamment l'un de l'autre, sont un hydrogène ou un groupe alkyle ;
ou
de formule II : 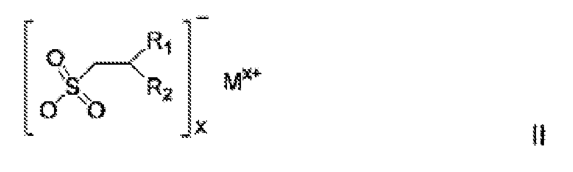 dans laquelle R₁ est un nitrile, un carboxy ester, un carboxy amide, un carboxy acide ou un groupe aryle, R₂ est un hydrogène ou un groupe alkyle et M^{x+} est un cation dont la valence est x.

13. Microsphères thermoplastiques expansibles selon la revendication 12, dans lesquelles ledit sel ou dérivé d'anion d'acide sulfonique est choisi dans le groupe constitué par l'acide 2-cyano-éthanesulfonique, l'acide 2-cyano-2-méthyl-éthanesulfonique, un acide 2-aryl-éthanesulfonique, l'acide 2-méthoxycarbonyl-éthanesulfonique, l'acide 2-méthoxycarbonyl-2-méthyl-éthane-sulfonique, l'acide 2-carboxy-éthanesulfonique, l'acide 2-carbamoyl-éthane-sulfonique, l'ester de méthyle de l'acide 2-cyano-éthanesulfonique, l'ester de méthyle de l'acide 2-cyano-2-méthyl-éthanesulfonique, l'ester de méthyle de l'acide 2-méthoxycarbonyl-éthanesulfonique, l'ester de méthyle de l'acide 2-méthoxycarbonyl-2-méthyl-éthanesulfonique, l'ester de méthyle de l'acide 2-carboxy-éthanesulfonique, les sels de sodium, de potassium, de magnésium et d'ammonium de 2-cyano-éthanesulfonate, de 2-cyano-2-méthyl-éthanesulfonate, de 2-aryl-éthanesulfonate, de 2-méthoxycarbonyl-éthanesulfonate, de 2-méthoxycarbonyl-2-méthyl-éthanesulfonate, de 2-carboxy-éthanesulfonate et de 2-carbamoyl-éthanesulfonate.
